(19) **Europäisches Patentamt / European Patent Office / Office européen des brevets**

(11) **EP 2 023 166 B1**

(12) **EUROPEAN PATENT SPECIFICATION**

(45) Date of publication and mention
of the grant of the patent:
**09.03.2011 Bulletin 2011/10**

(51) Int Cl.:
*G02B 5/02* *(2006.01)*    *G02B 7/00* *(2006.01)*
*G02B 7/188* *(2006.01)*    *B29C 55/02* *(2006.01)*

(21) Application number: **08161472.9**

(22) Date of filing: **30.07.2008**

(54) **Optical Element Comprising Restrained Asymmetrical Diffuser**

Optisches Element mit rückgehaltenem asymmetrischen Diffusor

Élément optique comprenant diffuseur asymétrique limité

(84) Designated Contracting States:
**DE FR GB**

(30) Priority: **08.08.2007 US 890899**

(43) Date of publication of application:
**11.02.2009 Bulletin 2009/07**

(73) Proprietor: **Rohm and Haas Denmark Finance A/S
2100 Copenhagen (DK)**

(72) Inventor: **Laney, Thomas M.
Spencerport, NY 14559 (US)**

(74) Representative: **Kent, Venetia Katherine
Patent Outsourcing Limited
1 King Street
Bakewell
Derbyshire DE45 1DZ (GB)**

(56) References cited:
EP-A- 0 838 320    EP-A- 1 408 349
WO-A-02/48760    WO-A-2006/107977
GB-A- 883 702    US-A- 2 577 620
US-A- 2 700 007    US-A- 3 051 054
US-A- 4 684 424    US-A- 5 321 109

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**BACKGROUND OF THE INVENTION**

The invention relates to a unitary optical element including an asymmetric diffuser and its use in optical displays, and more particularly to liquid crystal displays (LCDs) that may be used in LCD monitors and LCD televisions.

Liquid crystal displays (LCDs) are optical displays used in devices such as laptop computers, hand-held calculators, digital watches and televisions. Some LCDs include a light source that is located to the side of the display, with a light guide positioned to guide the light from the light source to the back of the LCD panel. Other LCDs, for example some LCD monitors and LCD televisions (LCD-TVs), are directly illuminated using a number of light sources positioned behind the LCD panel. This arrangement is increasingly common with larger displays, because the light power requirements, to achieve a certain level of display brightness, increase with the square of the display size, whereas the available real estate for locating light sources along the side of the display only increases linearly with display size. In addition, some LCD applications, such as LCD-TVs, require that the display be bright enough to be viewed from a greater distance than other applications, and the viewing angle requirements for LCD-TVs are generally different from those for LCD monitors and hand-held devices.

Some LCD monitors and most LCD-TVs are commonly illuminated from behind by a number of cold cathode fluorescent lamps (CCFLs). These light sources are linear and stretch across the full width of the display, with the result that the back of the display is illuminated by a series of bright stripes separated by darker regions. Such an illumination profile is not desirable, and so a diffuser plate is used to smooth the illumination profile at the back of the LCD device.

Some LCD monitors and most LCD-TVs commonly stack an arrangement of light management films adjacent to the diffuser plate on the opposite side from the lamps. These light management films generally comprise collimating diffuser films, prismatic light directing films, and reflective polarizer films. Handling of these individual light management films to manufacture LCD displays is very labor intensive as some films are supplied with protective cover sheets which must be first removed and then each light management film placed in the back light unit of the LCD individually. Also, inventory and tracking of each film individually can add to the total cost to manufacture the LCD display. Further, as these light management films are handled individually there is more risk of damage to the films during the assembly process.

Currently, LCD-TV diffuser plates typically employ a polymeric matrix of polymethyl methacrylate (PMMA) with a variety of dispersed phases that include glass, polystyrene beads, and $CaCO_3$ particles. These plates are thick and heavy while display manufacturers are always trying to thin the form factor and reduce the weight of displays. The diffuser plates often deform or warp after exposure to the elevated humidity and high temperature caused by the lamps which causes viewing defects in the displays. In addition, the diffuser plates require customized extrusion compounding to distribute the diffusing particles uniformly throughout the polymer matrix, which further increases costs.

U. S. Pat. Application No. 2006/0082699 describes one approach to reducing the cost of diffusion plates by laminating separate layers of a self-supporting substrate and an optically diffuse film. Here, the use of adhesives to laminate these layers together results in reduced efficiency of the system by adding light absorption materials. Also the additional processing cost to laminate the layers together is self-defeating. Also, this previous disclosure does not solve the issue of the thick form factor and heavy weight of the diffuser plate. Nor does this solution address the issue of warping of the diffuser plate. Also, since generally at least one air gap is required between two of the adjacent light management layers, special lamination techniques must be used in order to enable the entire arrangement of light management layers to be one integral unit. These special lamination techniques which laminate around the perimeter of the adjacent layers requiring an air gap that is costly and generally not effective at maintaining physical integrity of the light management arrangement.

Document EP 1 408 349 discloses a method for modifying a cube corner retro reflective screen.

Document WO 02/48760 discloses an asymmetric diffuser.

Hence, it is desirable to replace the diffuser plate with an optical diffuser film, which would have a much thinner form factor as well as significantly lower weight. It is further desirable to have a diffuser film that has dimensional stability as well as high optical transmission while maintaining a high level of light uniformization.

**SUMMARY OF THE INVENTION**

An optical element having all the features recited in claim 1.

**BRIEF DESCRIPTION OF THE DRAWINGS**

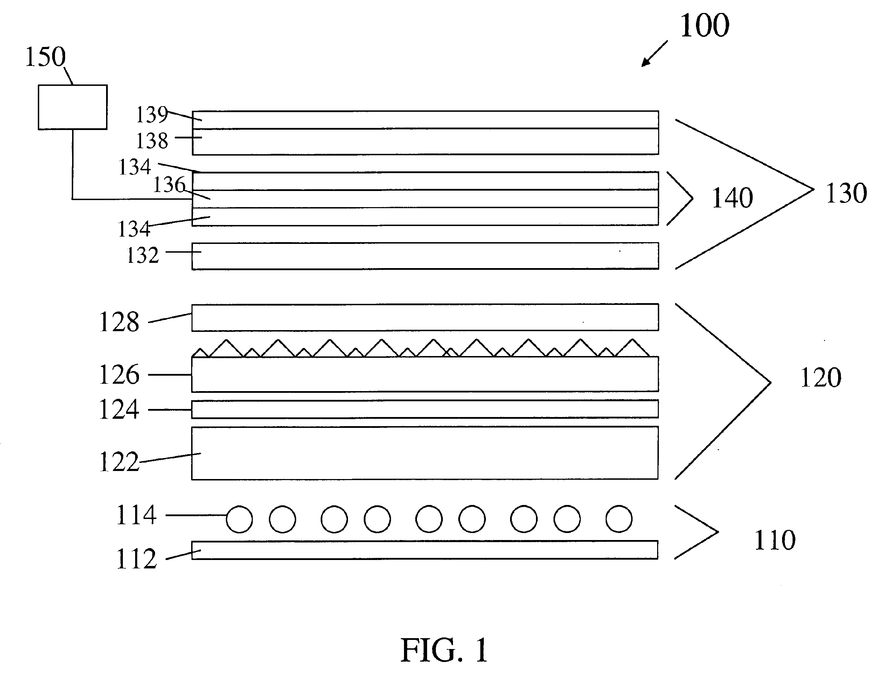

Figure 1 illustrates a typical back-lit liquid crystal display device that uses a diffuser plate;

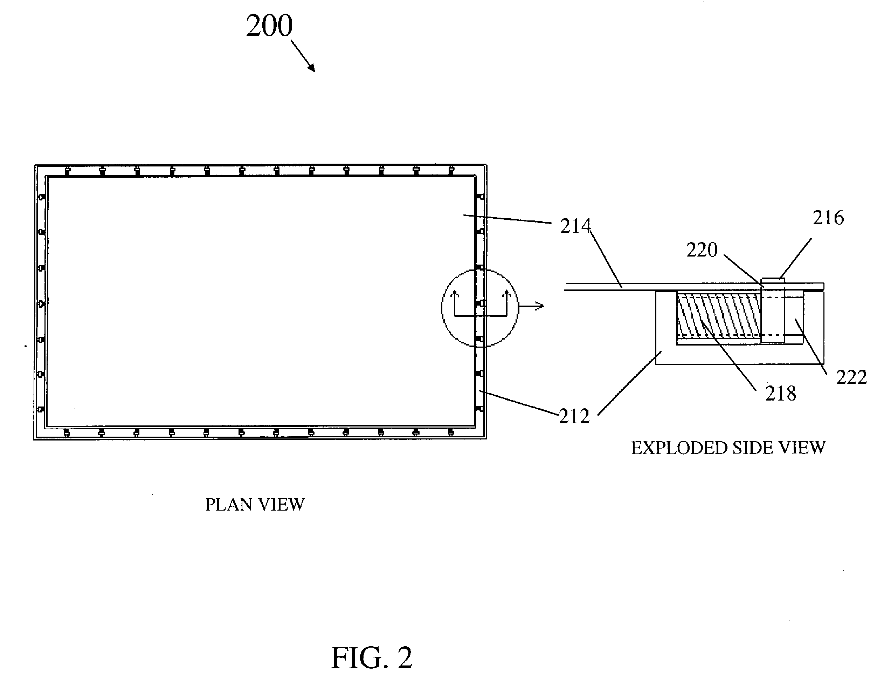

Figure 2 illustrates an optical element comprising an asymmetric diffuser film, which is supported by a controlled tensile force via spring mechanisms protruding through holes or slots in the film and connected to a frame around the perimeter of the film according to principles of the present invention;

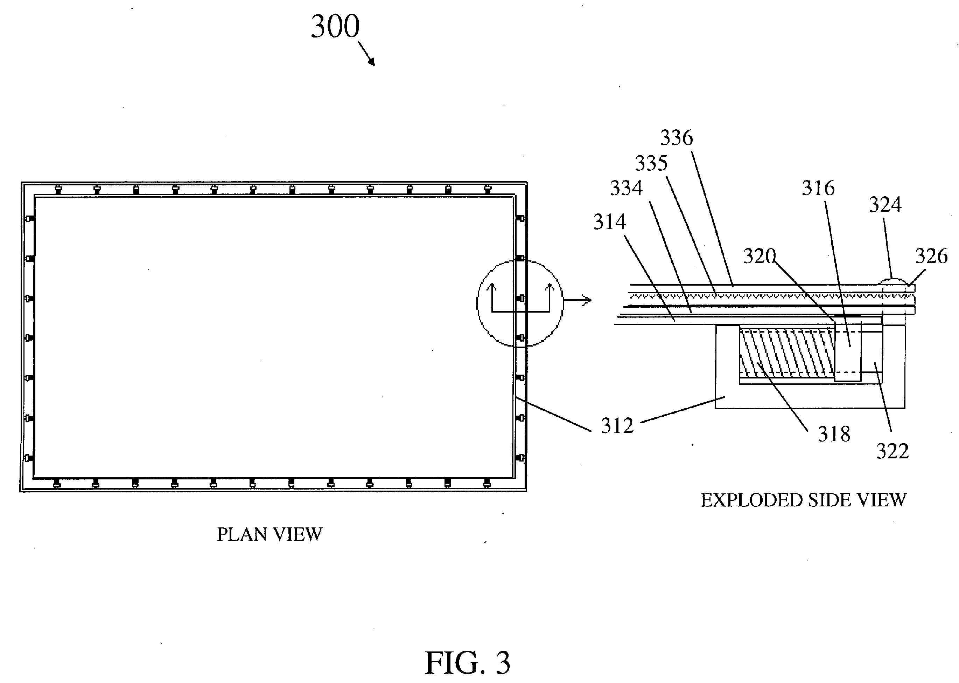

Figure 3 illustrates an optical element comprising an asymmetric diffuser film, which is supported by a controlled tensile force via tensioning mechanisms protruding through holes or slots in the film and connected to a frame around the perimeter of the film according to principles of the present invention;

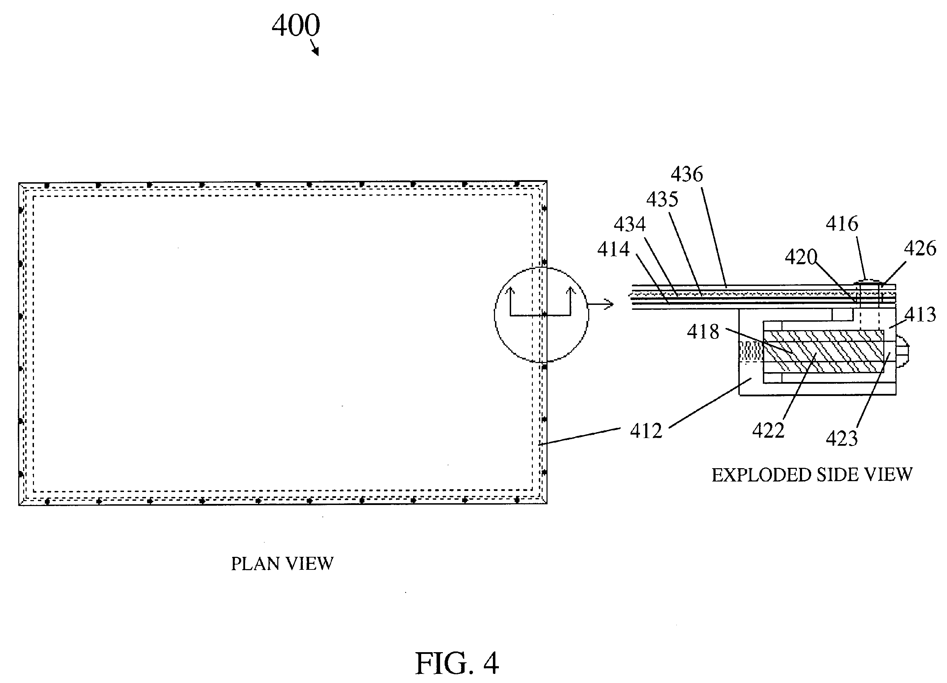

Figure 4 illustrates an optical element comprising an asymmetric diffuser film, which is supported by a controlled tensile force via a sub-frame connected to a frame around the perimeter of the film via spring mechanisms according to principles of the present invention;

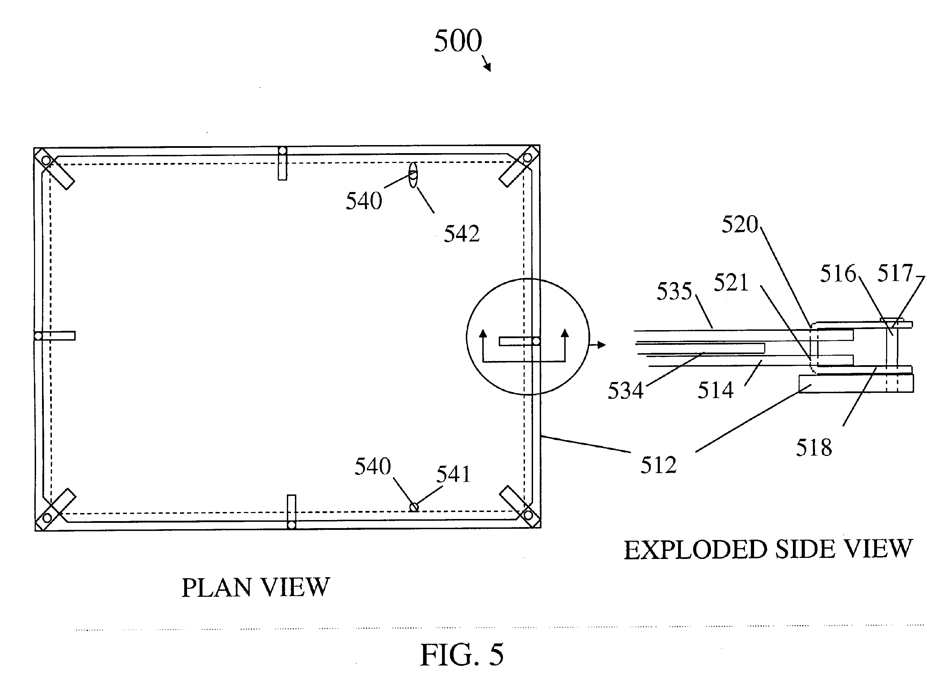

Figure 5 illustrates an optical element comprising an asymmetric diffuser film, which is supported by a controlled tensile force via tensioned straps connected to a frame around the perimeter of the film according to an unclaimed example of the present invention;

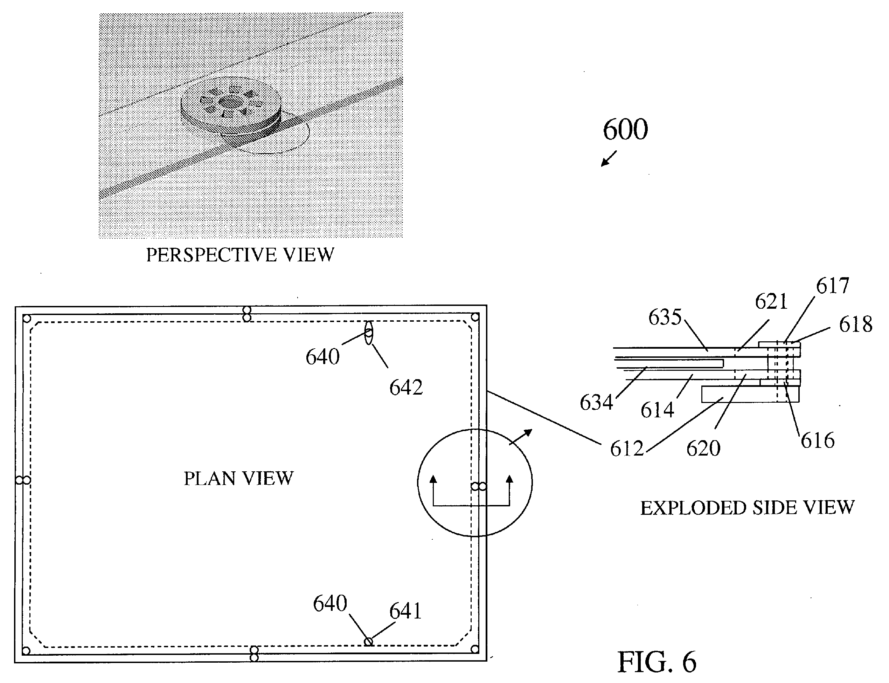

Figure 6 illustrates an optical element comprising an asymmetric diffuser film, which is supported by a controlled tensile force via tensioned grommets connected to a frame around the perimeter of the film according to an unclaimed example of the present invention;

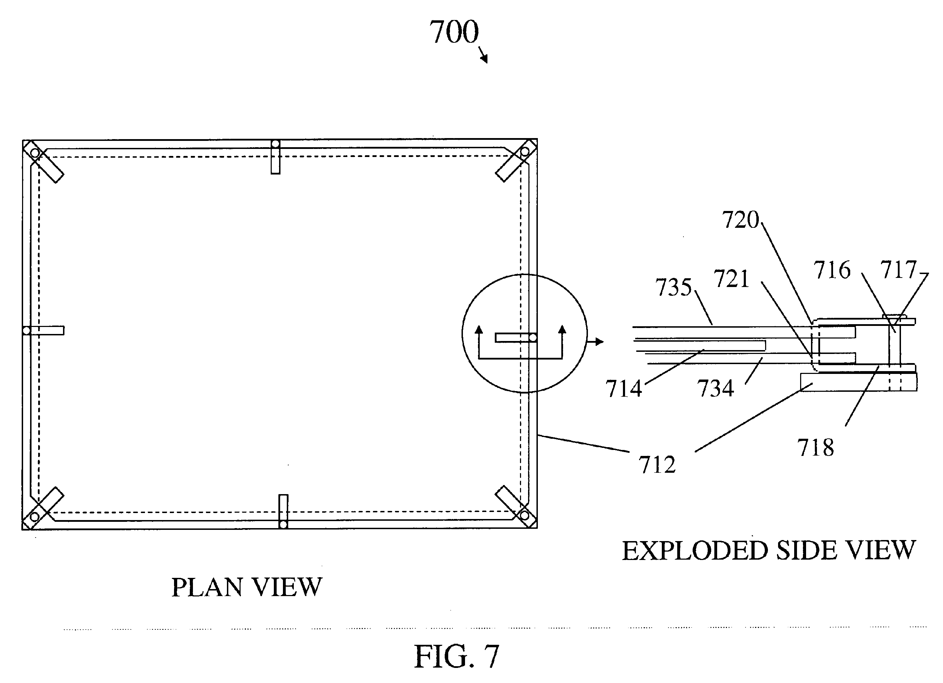

Figure 7 illustrates an optical element comprising an asymmetric diffuser film, which is supported between two outer transparent films exhibiting relatively high dimensional stability, wherein a controlled tensile force is applied via tensioned straps to the two outer transparent films but not the inner films according to an unclaimed example of the present invention;

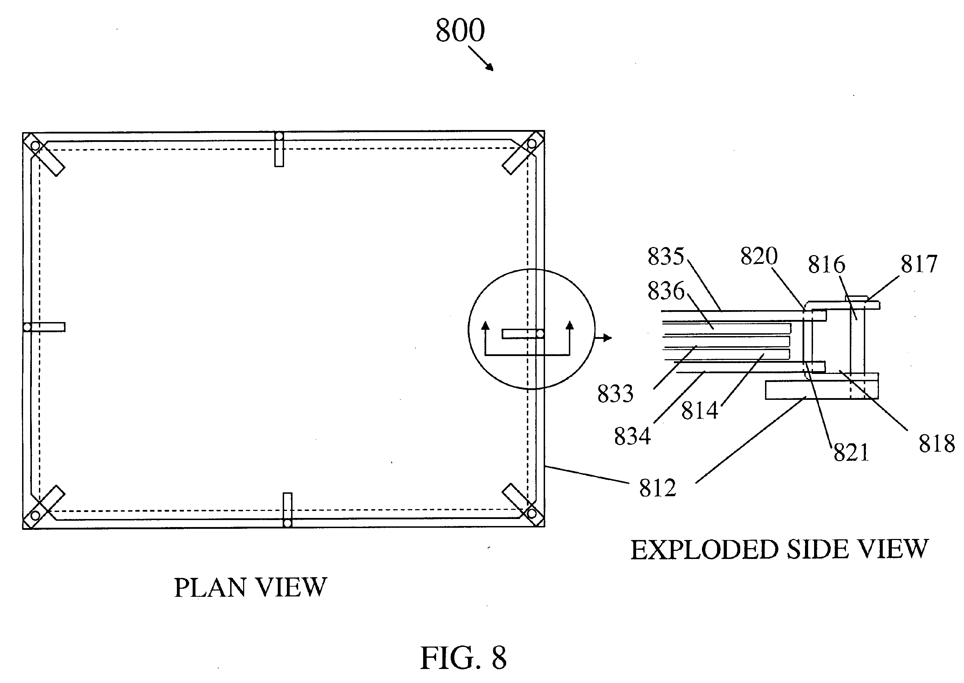

Figure 8 illustrates an optical element comprising an asymmetric diffuser film, a bead coated collimating diffuser film, and a light directing film inserted between two outer transparent films exhibiting relatively high dimensional stability, wherein a controlled tensile force is applied via tensioned straps to the two outer transparent films but not the inner films such that the optical element is a unitary component that comprises the entire light management film arrangement for an LCD display;

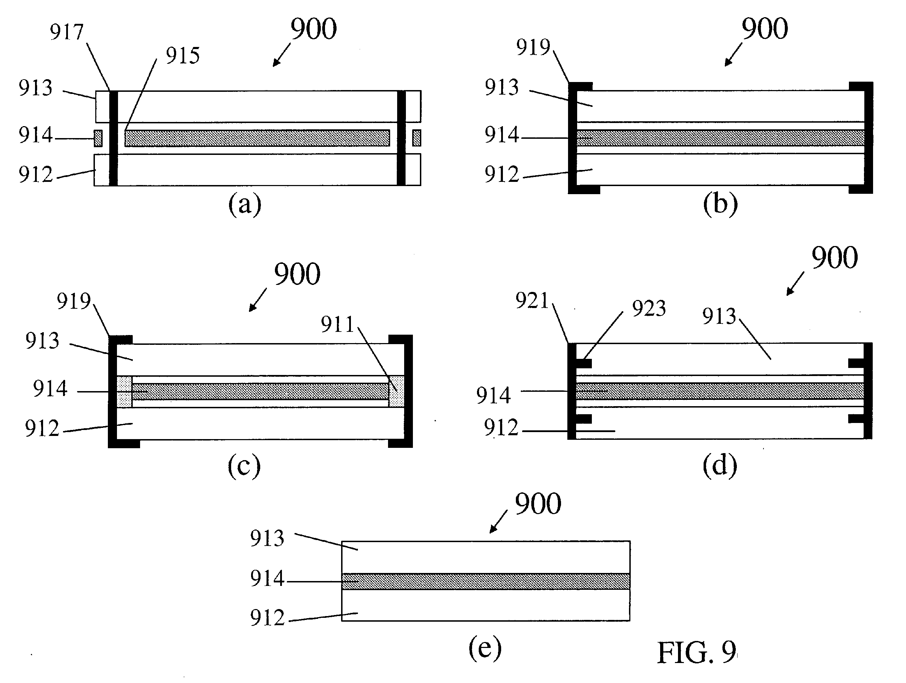

Figure 9 illustrates an optical element comprising an asymmetric diffuser film placed between two integrally bound optically transmissive substrates that together are self-supporting according to an unclaimed example of the present invention;

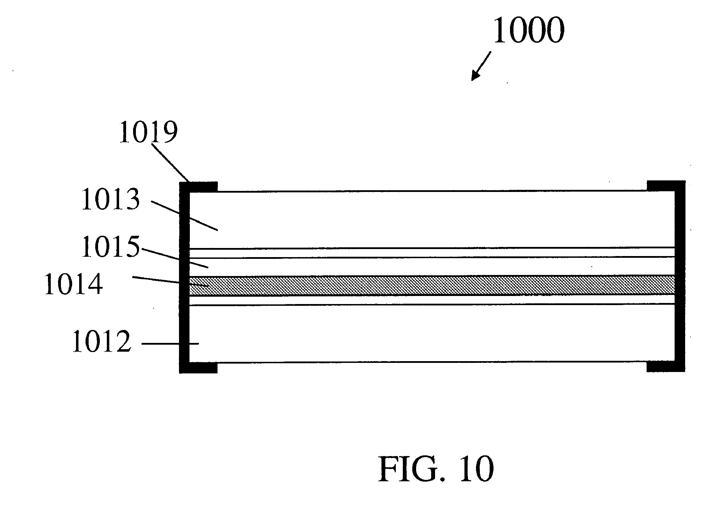

Figure 10 illustrates an optical element comprising an asymmetric diffuser film and a bead coated collimating diffuser film placed between two integrally bound optically transmissive substrates that together are self-supporting according to an unclaimed example of the present invention;

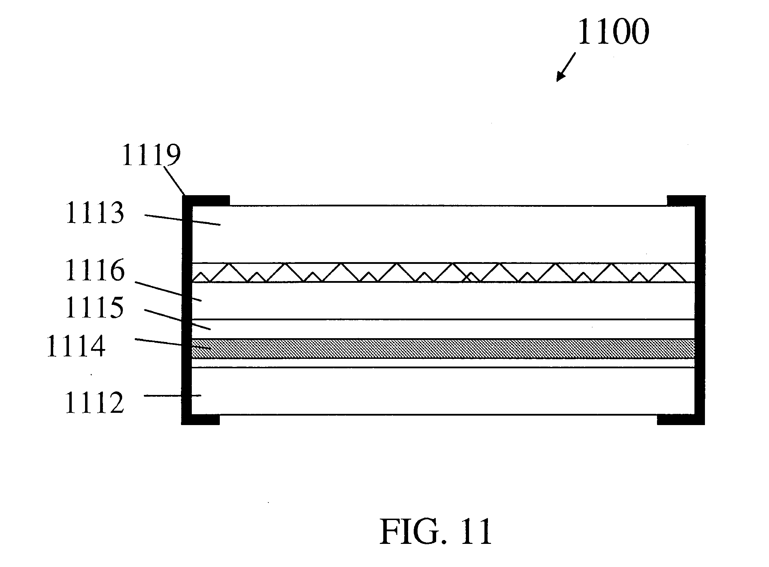

Figure 11 illustrates an optical element comprising an asymmetric diffuser film, a bead coated collimating diffuser film, and a light directing film placed between two integrally bound optically transmissive substrates that together are self-supporting according to an unclaimed example of the present invention;

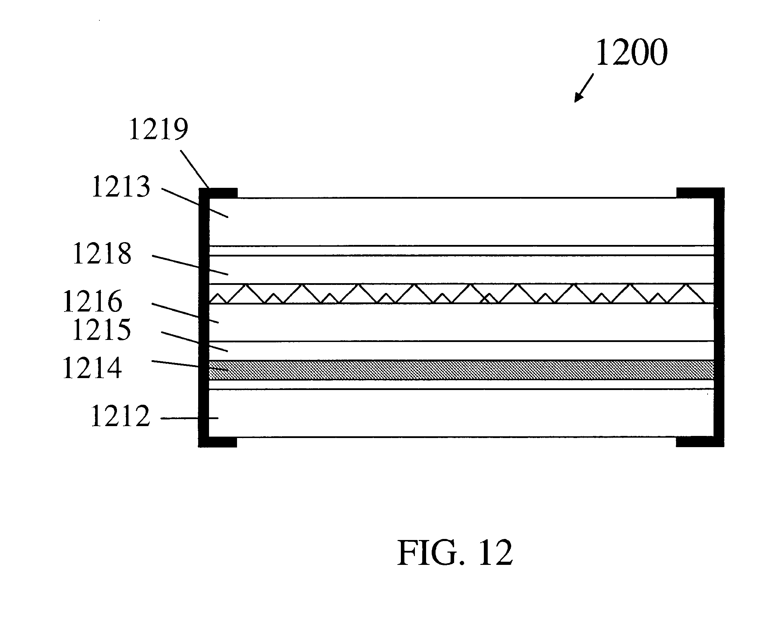

Figure 12 illustrates an optical element comprising an asymmetric diffuser film, a bead coated collimating diffuser film, a light directing film, and a reflective polarizer film placed between two integrally bound optically transmissive substrates that together are self-supporting according to an unclaimed example of the present invention; and

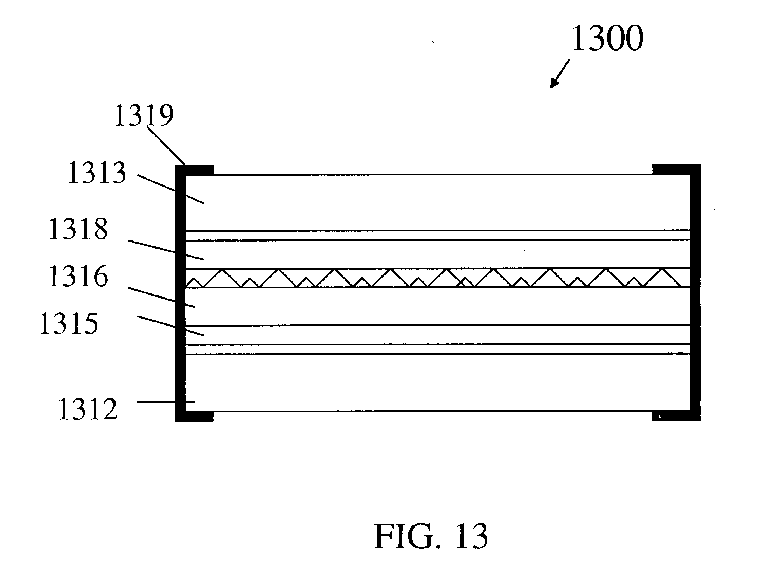

Figure 13 illustrates an optical element comprising a bead coated collimating diffuser film, a light directing film, and a reflective polarizer film placed between two integrally bound optically transmissive substrates that together are self-supporting wherein the substrate adjacent the bead coated collimating diffuser film is asymmetrically diffusing, according to an unclaimed example of the present invention.

Definitions

For convenience, certain terms used in the specification and examples are collected here.

"Diffuse" and "diffusing," as defined herein, include light scattering or diffusion by reflection, refraction or diffraction from particles, surfaces, or layers or regions.

"Diffuser Plate" and "Diffuser Film" and "Diffuser" are referred to herein as optical elements that provide a scattering or diffusion property to one or more light rays. The change in angle of a light ray may be due to refraction, reflection, diffusion, diffraction or other properties known to change the direction incident light. Diffuser plates and films may be thick or thin and diffuser plates referred to herein may also refer to diffuser films or sheets and the optical functions may be similar. As suggested here, a diffuser plate (or film) may be thin and may incorporate many layers or regions providing different properties. A diffuser plate may incorporate other features or materials in the volume or on one or more surfaces that impart a desired optical, thermal, mechanical, electrical, or environmental performance.

The "Gain" of a light scattering element is the ratio of the maximum luminance of an illuminated light transmitting material in a given direction relative to the luminance of a theoretically perfect diffuser in the same direction. To measure the gain of a particular sheet of material, a known amount of light is directed to the sheet, and the maximum luminance is so measured using a standard luminance meter. The maximum luminance of light measured is then compared to a theoretically "perfect" diffusive material.

The gain for an imperfect diffuser is the value of the maximum luminance (ML) divided by the value of the luminance of the theoretically perfect diffuser. For a theoretically perfect transmissive Lambertian diffuser material, providing one foot-candle (10.76 lumen/m2) of illumination to the material results in the luminance of one footlambert at all angles. Therefore, if the maximum luminance by a material from transmitted light is equal to one footlambert, its gain with respect to a theoretical diffuser is 1.0 for that angle of transmission. For imperfect diffusers the gain will be maximum (ML) and larger than 1 for a given viewing direction (typically measured orthogonal to the plane of the diffuser). Thus, a high gain screen will typically be brighter when viewed orthogonal to the plane than at other angles. Because the light transmitted by the material can never be more than the amount of light supplied, less light must be transmitted at angles other than the angle of maximum luminance.

"Multilayer optical film" includes individual films having air gaps in-between the layers. A multilayer optical film need not be an integral or laminated film.

"Angle of view" (AOV) is a measurement of illumination for all angles relative to two perpendicular axes in the plane of the material. These are called the X axis or the horizontal axis, and the Y axis or the vertical axis. The angle of view is measured by applying a "full width at half maximum" approach. The AOV at full-width at half maximum (a(1/2)) is calculated from sum of the absolute value of the angles (measured from an orthogonal to the plane of the material) at which the measured luminance is one-half the maximum luminance measured and noted. For example, if angles of + 35° and -35° were measured to have one-half of the maximum luminance in the horizontal direction, the AOV a(1/2) in the horizontal direction for the screen would be 70°.

The "asymmetry ratio" is the greater of the horizontal and the vertical AOV a(1/2) divided by the lower of the vertical and the horizontal AOV a(1/2), and thus is a measure of the degree of asymmetry between the horizontal luminance and the vertical luminance of the diffuser.

An "asymmetrical diffuser film or region" is defined here as a film or region with an asymmetry ratio greater than 1.5.

"Polarizer," as defined herein, includes absorbing or reflecting polarizers. These include dye and iodine based polarizers and reflective polarizers. Linear or circular polarizers are also included. It is commonly known that polarizers may be combined with waveplates or birefringent films in order to increase light recycling efficiency. For example, a quarter-wave film may be combined with a reflective polarizer to rotate the polarization state of the light such that more may pass through the polarizer when it is reflected back toward the polarizer.

"Optically coupled" is defined herein as a condition wherein two regions or layers are coupled such that the intensity of light passing from one region to the other is not substantially reduced by Fresnel interfacial reflection losses due to differences in refractive indices between the regions. "Optically coupling" methods include methods of coupling wherein the two regions coupled together have similar refractive indices or using an optical adhesive with a refractive index substantially near or in-between the regions or layers. Examples of "Optically coupling" include lamination using an index-matched optical adhesive, coating a region or layer onto another region or layer, or hot lamination using applied pressure to join two or more layers or regions that have substantially close refractive indices. Thermal transferring is another method that can be used to optically couple two regions of material. In manufacturing, two components may be combined during the forming process such as extrusion, coating, casting or molding. For example, two layers may be co-extruded together such that they are bonded or cured in contact with each other. In these instances, the layers or regions are referred to as optically coupled herein.

"Prismatic" or "Prismatic sheet" or "Prismatic structure" is defined herein as a surface relief structure that refracts or reflects light toward a desired direction. This refraction and reflection can provide collimating properties to light passing through the film. The structure can include arrays of elongated prism structures, micro-lens structures, and other surface relief structures. These features can be defined by a cross-sectional profile, a surface roughness, or by other surface characterization means.

"Collimating Film" and "Collimating structures" are defined here as films or structures wherein more of the light rays exiting the film or structures are directed toward the surface normal of the film or substrate plane in the case of structures on a substrate. Collimation properties can be achieved by refractive structures such as prisms, cones, microlenses, pyramids, hemispherical structures or linear, circular, random, regular, semi-random, or planar arrays of the aforementioned structures.

Used herein, "particles" and "domains" refer to individual regions of one or more materials that are distinctly different than their surroundings. They include organic particles, inorganic particles, dispersed phase domains, dispersed particles. They are not limited in shape and may be fibrous, spherical, ellipsoidal, or plate-like in shape.

Preferred asymmetric diffuser films of the present invention provide a high degree of flexibility in the materials and processes used in manufacturing. In the present invention, the structural and optical requirements are separated: the restraining mechanism provides the structural performance and the thin asymmetric differ film, provides the optical performance. By separating these functions, the cost advantages of using thin asymmetric diffuser sheets can be exploited, to reduce overall costs. By not including a substrate with the asymmetric diffuser film a high level of optical performance and a low manufacturing cost is realized. In addition, it is easier to control the diffusion properties more precisely when the diffuser is contained in a film rather than a substrate. By using an asymmetric diffuser film an optimal optical performance can be provided at any given thickness of the diffuser.

A schematic exploded view of the only embodiment of a direct-lit LC display device 100 is presented in Figure 1. Such a display device 100 may be used, for example, in an LCD monitor or LCD-TV. The display device 100 is based on the use of a front panel assembly 130, comprising a LC panel 140, which typically comprises a layer of LC 136 disposed between panel plates 134. The plates 134 are often formed of glass, and may include electrode structures and alignment layers on their inner surfaces for controlling the orientation of the liquid crystals in the LC layer 136. The electrode structures are commonly arranged so as to define LC panel pixels, areas of the LC layer where the orientation of the liquid crystals can be controlled independently of adjacent areas. A color filter may also be included with one or more of the plates 134 for imposing color on the image displayed.

An upper absorbing polarizer 138 is positioned above the LC layer 136 and a lower absorbing polarizer 132 is positioned below the LC layer 136. The absorbing polarizers 138, 132 and the LC panel 140 in combination control the transmission of light from the backlight 110 through the display 100 to the viewer. In some LC displays, the absorbing polarizers 138, 132 may be arranged with their transmission axes perpendicular. When a pixel of the LC layer 136 is not activated, it may not change the polarization of light passing there through. Accordingly, light that passes through the lower absorbing polarizer 132 is absorbed by the upper absorbing polarizer 138, when the absorbing polarizers 138, 132 are aligned perpendicularly. When the pixel is activated, on the other, hand, the polarization of the light passing there through is rotated, so that at least some of the light that is transmitted through the lower absorbing polarizer 132 is also transmitted through the upper absorbing polarizer 138. Selective activation of the different pixels of the LC layer 136, for example by a controller 150, results in the light passing out of the display at certain desired locations, thus forming an image seen by the viewer. The controller may include, for example, a computer or a television controller that receives and displays television images. One or more optional layers 139 may be provided over the upper absorbing polarizer 138, for example to provide mechanical and/or environmental protection to the display surface. In one example, the layer 139 may include a hardcoat over the absorbing polarizer 138.

It will be appreciated that some type of LC displays may operate in a manner different from that described above. For example, the absorbing polarizers may be aligned parallel and the LC panel may rotate the polarization of the light when in an unactivated state. Regardless, the basic structure of such displays remains similar to that described above.

The backlight 110 includes a number of light sources 114 that generate the light that illuminates the LC panel 120. The light sources 114 used in a LCD-TV or LCD monitor are often linear, cold cathode, fluorescent tubes that extend across the display device 100. Other types of light sources may be used, however, such as filament or arc lamps, light emitting diodes (LEDs), flat fluorescent panels or external fluorescent lamps. This list of light sources is not intended to be limiting or exhaustive, but only exemplary.

The backlight 110 may also include a reflector 112 for reflecting light propagating downwards from the light sources 114, in a direction away from the LC panel 140. The reflector 112 may also be useful for recycling light within the display device 100, as is explained below. The reflector 112 may be a specular reflector or may be a diffuse reflector. Examples of suitable diffuse reflectors include polymers, such as polyethylene terephthalate (PET), polycarbonate (PC), polypropylene, polystyrene and the like, loaded with diffusely reflective particles, such as titanium dioxide, barium sulphate, calcium carbonate and the like.

An arrangement 120 of light management layers is positioned between the backlight 110 and the front panel assembly 130. The light management layers affect the light propagating from backlight 110 so as to improve the operation of the display device 100 . For example, the arrangement 120 of light management layers may include a diffuser plate 122. The diffuser plate 122 is used to diffuse the light received from the light sources, which results in an increase in the uniformity of the illumination light incident on the LC panel 140. Consequently, this results in an image perceived by the viewer that is more uniformly bright.

The arrangement 120 of light management layers may also include a reflective polarizer 128. The light sources 114 typically produce unpolarized light but the lower absorbing polarizer 132 only transmits a single polarization state, and so about half of the light generated by the light sources 114 is not transmitted through to the LC layer 136. The reflecting polarizer 128, however, may be used to reflect the light that would otherwise be absorbed in the lower absorbing polarizer, and so this light may be recycled by reflection between the reflecting polarizer 128 and the reflector 112. At least some of the light reflected by the reflecting polarizer 128 may be depolarized, and subsequently returned to the reflecting polarizer 128 in a polarization state that is transmitted through the reflecting polarizer 128 and the lower absorbing polarizer 132 to the LC layer 136. In this manner, the reflecting polarizer 128 may be used to increase the fraction of light emitted by the light sources 114 that reaches the LC layer 136, and so the image produced by the display device 100 is brighter.

Any suitable type of reflective polarizer may be used, for example, multilayer optical film (MOF) reflective polarizers; diffusely reflective polarizing film (DRPF), such as continuous/disperse phase polarizers, wire grid reflective polarizers or cholesteric reflective polarizers.

The arrangement 120 of light management layers may also include a light directing film 126. A light directing film is one that includes a surface structure that redirects off-axis light in a direction closer to the axis of the display. This increases the amount of light propagating on-axis through the LC layer 136, thus increasing the brightness of the image seen by the viewer. One example is a prismatic light directing film, which has a number of prismatic ridges that redirect the illumination light, through refraction and reflection.

Typically, the controlled tensile force is provided via the use of a spring type mechanism with pins protruding through holes or slots in the film. Another means to provide the controlled tensile force is using tensioning straps as the spring type mechanism that protrude through holes or slots in the film.

The spring type mechanisms are further secured to a frame that are located around the perimeter of the film. A "spring type mechanism" is defined here as any mechanism that can substantially maintain a uniform tensile force over a range of motion. That range of motion must be at least as large a distance as the maximum expected change in dimension of the tensioned film under the design temperature and humidity ranges. Substantially maintained is defined here as maintaining the tensile force to at least 50% of the original force. Preferably, the force can be maintained to at least 75% of the original force. The term film is defined here as a sheet of material that has a thickness of less than 500 um.

The only embodiment of the optical element of the present invention is schematically illustrated in Figure 2. The optical element 200 includes an asymmetric diffuser film 214 and a supporting frame 212 located around the perimeter of the film. Perimeter is defined here as an imaginary continuous line drawn along all thin edges of the film. Typically for LDC displays there are 4 orthogonal edges creating a rectangular perimeter. Other optical films can also be added to the arrangement of light management layers above the asymmetric diffuser film as will be illustrated in subsequent figures. Figure 2 shows one means by which the asymmetric diffuser film 214 is supported by a tensile force. A pin 216 protrudes through a slot 220 in the film. The pin has at least one surface that is normal to the direction of the tensile force. The pin 216 slides on a shaft 222. Shaft 222 is secured at both ends by the frame 212. The frame serves to help provide the tension as a fixed surface and also can help to form a surface to which the tensioned film is positionally forced to maintain by being somewhat pulled against the top surface of the frame. A spring 218, which also slides on shaft 222, is compressed against pin 216 resulting in a tensile force on the optical diffuser film 214 that is applied in a direction perpendicular to the edge of the film nearest the applied location. Many such spring type mechanisms are placed around the perimeter of the diffuser film 214 at various locations.

The asymmetric diffuser film 214 is self-supporting when tensioned. Here self-supporting is defined as maintaining a planar uniformity of the film under the films own weight plus the addition of the weight of any other optical films to be used in the light management arrangement. Planar uniformity is defined as having an out of plane deflection from original position of less than 180$^{th}$ of the length of the longest side of the diffuser film.

The tensioned asymmetric diffuser film 214 and one or more other light management layers may be included in a light management arrangement disposed between the backlight and the LCD panel. The tensioned asymmetric diffuser film 214 provides a stable structure for supporting the light management arrangement. The tensioned film is not prone to warping like conventional diffuser plate systems.

Examples of the asymmetric diffuser film 214 typically include polymeric films. Such polymeric asymmetric diffuser films are either volume diffusers whereby the light diffusing structures are in the bulk of the film or they are surface diffusers whereby the light diffusing structures are on the surface of the film. The asymmetric diffuser 214 may contain volumetric and surface relief based diffusive regions that may be asymmetric and symmetric.

Asymmetric Volume Diffuser Films

Asymmetric volume diffusers have regions in the bulk of the film that comprise non-spherical domains that are at least somewhat aligned in terms of their major axes. These domains have a refractive index that differs from the matrix polymer of the film.

Asymmetric volume diffusers 214 may contain more than one diffusing region or layers. One or more of the diffusing regions may have an asymmetric diffusion profile. In an example a rigid, substantially transparent material separates two diffusing regions. In another example, the asymmetrically diffusive regions are aligned such that the luminance uniformity of a backlight is improved. In another example, the spatial luminance profile of a backlight using a linear or grid array of light sources is substantially uniform through the use of one or more asymmetrically diffusing regions.

The amount of diffusion in the x-z and y-z planes affects the luminance uniformity and the potential viewing angle of the backlight and display. By increasing the amount of diffusion in one plane preferentially over that in the other plane, the viewing angle is asymmetrically increased. For example, with more diffusion in the x-z plane than the y-z plane, the viewing angle of the display (related to the luminance and display contrast) can be increased in the x direction. The diffusion asymmetry introduced through one or more diffusing layers of an asymmetric diffuser film 214 in a backlight can allow for greater control over the viewing angle and angular intensity profile of the display and the optical efficiency of the backlight and display system. In another example, amount of diffusion varies in the plane of the diffusing layer. In another example, the amount of diffusion varies in the plane perpendicular to the plane of the layer (z direction). In a another example, the amount of diffusion is higher in the regions in close proximity of one or more of the light sources.

The alignment of the axis of stronger diffusion in an asymmetric diffuser may be aligned parallel, perpendicular or at an angle with respect to a light source or edge of the backlight. In an example, the axis of stronger diffusion is aligned perpendicular to the length of a linear light source in a backlight.

The particles within one or more asymmetric diffuser layers may be fibrous, spheroidal, cylindrical, other non-symmetric shape, or a combination of one or more of these shapes. The shape of the particles may be engineered such that substantially more diffusion occurs in the x-z plane than that in the y-z plane. The shape of the particles or domains may vary spatially along one or more of the x, y, or z directions. The variation may be regular, semi-random, or random.

The particles within a diffusing layer may be aligned at an angle normal, parallel, or an angle with respect to an edge of the diffusing layer or a linear light source or array of light sources. In an example, the particles in a diffusing layer are substantially aligned along one axis that is parallel to a linear array of light sources.

The particles may be contained within the volume of a continuous phase material or they may be protruding from the surface or substantially planar surface of the continuous phase material.

The particles described herein in one or more light diffusing layers may be in a low or high concentration. When the diffusion layer is thick, a lower concentration of particles is needed. When the light diffusing layer is thin, a higher concentration of particles is needed. The concentration of the dispersed phase may be from less than 1% by weight to 50% by weight. In certain conditions, a concentration of particles higher than 50% may be achieved by careful selection of materials and manufacturing techniques. A higher concentration permits a thinner diffusive layer and as a result, a thinner backlight and display.

The refractive index difference between the particles and the matrix may be very small or large. If the refractive index difference is small, then a higher concentration of particles may be required to achieve sufficient diffusion in one or more directions. If the refractive index difference is large, then fewer particles (lower concentration) are typically required to achieve sufficient diffusion and luminance uniformity. The refractive index difference between the particles and the matrix may be zero or larger than zero in one or more of the x, y, or z directions.

The refractive index of the individual polymeric phases is one factor that contributes to the degree of light scattering by the film. Combinations of low and high refractive index materials result in larger diffusion angles. In cases where birefringent materials are used, the refractive indexes in the x, y, and z directions can each affect the amount of diffusion or reflection in the processed material. In some applications, one may use specific polymers for specific qualities such as thermal, mechanical, or low-cost, however, the refractive index difference between the materials (in the x, y, or z directions, or some combination thereof) may not be suitable to generate the desired amount of diffusion or other optical characteristic such as reflection. In these cases, it is known in the field to use small particles, typically less than 1 micron in size to increase or decrease the average bulk refractive index. Preferably, light does not directly scatter from these added particles, and the addition of these particles does not substantially increase the absorption or backscatter.

Additive particles can increase or decrease the average refractive index based on the amount of the particles and the refractive index of the polymer to which they are added, and the effective refractive index of the particle. Such additives can include: aerogels, sol-gel materials, silica, kaolin, alumina, fine particles of $MgF_2$ (index of refraction is 1.38), $SiO_2$ (index of refraction is 1.46), $AlF_3$ (index of refraction is 1.33-1.39), $CaF_2$ (index of refraction is 1.44), LiF (index of refraction is 1.36-1.37), NaF (index of refraction is 1.32-1.34) and $ThF_4$ (index of refraction is 1.45-1.5) or the like can be considered, as discussed in U.S. Pat. No. 6,773,801. Alternatively, fine particles having a high index of refraction, may be used such as fine particles of titania ($TiO_2$) or zirconia ($ZrO_2$) or other metal oxides.

One or more surfaces of the diffusing layer may contain a non-planar surface. The surface profile may contain protrusions or pits that may range from 1 nm to 3 mm in the x, y, or z directions. The profile or individual features may have periodic, random, semi-random, or other uniform or non-uniform structure. The surface features may be designed to provide function to the diffuser plate such as collimation, anti-blocking, refraction, symmetric diffusion, asymmetric diffusion or diffraction. In an example, the surface features are a linear array of prismatic structures that provide collimation properties. In another example, the surface contains hemispherical protrusions that prevent wet-out, provide anti-blocking properties, or light collimating properties.

One or more surfaces of the diffusing layer may contain surface profiles that provide collimation properties. The collimation properties direct light rays incident from large angles into angles closer to the display normal (smaller angles). The features may be in the form of a linear array of prisms, an array of pyramids, an array of cones, an array of hemispheres or other feature that is known to direct more light into the direction normal to the surface of the backlight. The array of features may be regular, irregular, random, ordered, semi-random or other arrangement where light is can be collimated through refraction, reflection, total internal reflection, diffraction, or scattering.

The enhanced asymmetric diffuser of this invention may contain materials, additives, components, blends, coatings, treatments, layers or regions that provide additional optical, mechanical, environmental, thermal or electrical benefits. The properties of the diffuser film may include one or more of the following: Optical: increased optical throughput, increased/decreased diffusion along one or more axis, reduced or increased birefringence, increased luminance uniformity, improved color stability, reduced haze; Mechanical/Physical: increase rigidity, reduced thickness, reduced weight, increased scratch resistance, reduced/increased pencil hardness, anti-blocking features; Environment: reduced warpage, increased light resistance, increased moisture resistance, increased light resistance, increased ultraviolet absorption; Thermal: increased thermal resistance, increased softening temperature; Electrical: decreased surface resistance.

Asymmetric Surface Diffuser Films

Asymmetric surface diffusers have structures on the surface of the film that comprise holographic structures or non-spherical domains that are at least somewhat aligned in terms of their major axes. Holographic structures are typically embossed onto the film from recorded material tools. Non-spherical domains have a refractive index that differs from the matrix polymer of the film. One example of the non-spherical domains that are at least somewhat aligned are a close-packed array of anamorphic microlenses. "Anamorphic" refers to a feature producing different magnification of an image in each of two perpendicular directions.

Asymmetric Diffuser Film Composition

The diffuser film may be composed of one or more light scattering regions containing a continuous phase and a dispersed phase. In another example, the diffuser film may contain a region of light scattering surface features that exhibit asymmetric scattering properties. In another example, one or more of the diffusing layers may be an adhesive joining two or more components of the asymmetric diffuser film 214. The film may also contain a substrate that may be substantially optically transparent and a continuous phase. The materials chosen for the substrate, dispersed, or continuous phases may be one or more polymeric or inorganic materials.

Such polymers include, but are not limited to acrylics, styrenics, olefins, polycarbonates, polyesters, cellulosics, polyester-carbonates, and the like. Specific examples include poly(methyl methacrylate) and copolymers thereof, polystyrene and copolymers thereof, poly(styrene-co-acrylonitrile), polyethylene and copolymers thereof, polypropylene and copolymers thereof, poly(ethylene-propylene) copolymers, poly(vinyl acetate) and copolymers thereof, poly(vinyl alcohol) and copolymers thereof, bisphenol-A polycarbonate and copolymers thereof, poly(ethylene terephthalate) and copolymers thereof, poly(ethylene 2,6-naphthalenedicarboxylate) and copolymers thereof, polyarylates, polyamide copolymers, poly(vinyl chloride), cellulose acetate, cellulose acetate butyrate, cellulose acetate propionate, polyetherimide and copolymers thereof, polyethersulfone and copolymers thereof, polysulfone and copolymers thereof, and polysiloxanes.

Numerous methacrylate and acrylate resins are suitable for one or more phases of the present invention. The methacrylates include but are not limited to polymethacrylates such as poly(methyl methacrylate) , poly(ethyl methacrylate), poly(propyl methacrylate), poly(butyl methacrylate), poly(isobutyl methacrylate), methyl methacrylate-methacrylic acid copolymer, methyl methacrylate-acrylate copolymers, and methyl methacrylate-styrene copolymers (e.g., MS resins). The preferred methacrylic resins include poly(alkyl methacrylate)s and copolymers thereof. The most preferred methacrylic resins include poly(methyl methacrylate) and copolymers thereof. The acrylates include but are not limited to poly(methyl acrylate), poly(ethyl acrylate), and poly(butyl acrylate), and copolymers thereof.

A variety of styrenic resins are suitable for polymeric phases of the present invention. Such resins include vinyl aromatic polymers, such as syndiotactic polystyrene. Syndiotactic vinyl aromatic polymers useful in the present invention include poly(styrene), poly(alkyl styrene)s, poly (aryl styrene)s, poly(styrene halide)s, poly(alkoxy styrene)s, poly(vinyl ester benzoate), poly(vinyl naphthalene) , poly(vinylstyrene), and poly(acenaphthalene), as well as the hydrogenated polymers and mixtures or copolymers containing these structural units. Examples of poly(alkyl styrene)s include the isomers of the following: poly(methyl styrene), poly(ethyl styrene), poly(propyl styrene), and poly(butyl styrene). Examples of poly(aryl styrene)s include the isomers of poly(phenyl styrene). As for the poly(styrene halide)s, examples include the isomers of the following: poly(chlorostyrene), poly(bromostyrene), and poly(fluorostyrene). Examples of poly(alkoxy styrene)s include the isomers of the following: poly(methoxy styrene) and poly(ethoxy styrene). Among these examples, the preferred styrene resin polymers, are: polystyrene, poly(p-methyl styrene) , poly(m-methyl styrene), poly(p-tertiary butyl styrene), poly(p-chlorostyrene), poly(m-chloro styrene), poly(p-fluoro styrene), and copolymers of styrene and p-methyl styrene. The most preferred styrenic resins include polystyrene and copolymers thereof.

Particular polyester and copolyester resins are suitable for phases of the present invention. Such resins include poly(ethylene terephthalate) and copolymers thereof, poly(ethylene 2,6-naphthalenedicarboxylate) and copolymers thereof, poly(1,4-cyclohexandimethylene terephthalate) and copolymers thereof, and copolymers of poly(butylene terephthalate). The acid component of the resin can comprise terephthalic acid, isophthalic acid, 2,6-naphthalenedicarboxylic acid or a mixture of said acids. The polyesters and copolyesters can be modified by minor amounts of other acids or a mixture of acids (or equivalents esters) including, but not limited to, phthalic acid, 4,4'-stilbene dicarboxylic acid, 2,6-naphthalenedicarboxylic acid, oxalic acid, malonic acid, succinic acid, glutaric acid, adipic acid, pimelic acid, suberic acid, azelaic acid, sebacic acid, 1,12-dodecanedioic acid, dimethylmalonic acid, cis-1,4-cyclohexanedicarboxylic acid and trans-1,4-cyclohexanedicarboxylic acid. The glycol component of the resin can comprise ethylene glycol, 1,4-cyclohexanedimethanol, butylene glycol, or a mixture of said glycols. The copolyesters can also be modified by minor amounts of other glycols or a mixture of glycols including, but not limited to, 1,3-trimethylene glycol, 1,4-butanediol, 1,5-pentanediol, 1,6-hexanediol, 1,7-heptanediol, 1,8-octanediol, 1,9-nonanediol, 1,10-decanediol, 1,12-dodecanediol, neopentyl glycol, 2,2,4,4-tetramethyl-1,3-cyclobutanediol, diethylene glycol, bisphenol A and hydroquinone. The preferred polyester resins include copolyesters formed by the reaction of a mixture of terephthalic acid and isophthalic acid or their equivalent esters with a mixture of 1,4-cyclohexanedimethanol and ethylene glycol. The most preferred polyester resins include copolyesters formed by the reaction of terephthalic acid or its equivalent ester with a mixture of 1,4-cyclohexanedimethanol and ethylene glycol.

Certain polycarbonate and copolycarbonate resins are suitable for phases of the present invention. Polycarbonate resins are typically obtained by reacting a diphenol with a carbonate precursor by solution polymerization or melt polymerization. The diphenol is preferably 2,2-bis(4-hydroxyphenyl)propane (so-called "bisphenol A") but other diphenols may be used as part or all of the diphenol. Examples of the other diphenol include 1,1-bis(4-hydroxyphenyl)ethane, 1,1-bis(4-hydroxyphenyl)cyclohexane, 2,2-bis(4-hydroxy-3,5-dimethylphenyl-)propane, 2,2-bis(4-hydroxy-3-methylphenyl) propane, bis(4-hydroxyphenyl) sulfideandbis(4-hydroxyphenyl)sulfone. The polycarbonate resin is preferably a resin which comprises bisphenol A in an amount of 50 mol % or more, particularly preferably 70 mol % or more of the total of all the diphenols. Examples of the carbonate precursor include phosgene, diphenyl carbonate, bischloroformates of the above diphenols, di-p-tolyl carbonate, phenyl-p-tolyl carbonate, di-p-chlorophenyl carbonate and dinaphthyl carbonate. Out of these, phosgene and diphenyl carbonate are particularly preferred.

A number of poly(alkylene) polymers are suitable for phases of the present invention. Such polyalkylene polymers include polyethylene, polypropylene, polybutylene, polyisobutylene, poly(4-methyl) pentene), copolymers thereof, chlorinated variations thereof, and fluorinated variations thereof.

Particular cellulosic resins are suitable for phases of the present invention. Such resins include cellulose acetate, cellulose acetate butyrate, cellulose acetate propionate, cellulose propionate, ethyl cellulose, cellulose nitrate. Cellulosic resins including a variety of plasticizers such as diethyl phthalate are also within the scope of the present invention.

Asymmetric Diffuser Film Additives

Additives, components, blends, coatings, treatments, layers or regions may be combined on or within the aforementioned phases to provide additional properties. These may be inorganic or organic materials. They may be chosen to provide increased thermal resistance so that the film does not buckle. They may be chosen to increase moisture resistance such that the filkm does not warp or degrade other properties when exposed to high levels of humidity. These materials may be designed to provide improved optical performance by reducing wet-out when in contact with other components in the backlight. They may be chosen to increase, decrease, or match the scratch resistance of other components in the display or backlight system. They may be chosen to decrease the surface or volumetric resistance of the asymmetric diffuser film to achieve anti-static properties.

The additives may be in components of one or more layers of the asymmetric diffuser films. They may be coatings that are added onto a surface or functional layers that are a combined during the manufacturing process. They may be dispersed throughout the volume of a layer or coating or they could be applied to a surface.

The asymmetric diffuser film 214 may be provided with protection from ultraviolet (UV) light, for example by including UV absorbing material or material in one of the layers that is resistant to the effects of UV light. Suitable UV absorbing compounds are available commercially, including, e. g., Cyasorb® UV-1164, available from Cytec Technology Corporation of Wilmington, Del., and Tinuvin® 1577, available from Ciba Specialty Chemicals of Tarrytown, N.Y.

Other materials may be included in the optical diffuser film 214 to reduce the adverse effects of UV light. One example of such a material is a hindered amine light stabilizing composition (HALS). Generally, the most useful HALS are those derived from a tetramethyl piperidine, and those that can be considered polymeric tertiary amines. Suitable HALS compositions are available commercially, for example, under the "Tinuvin" tradename from Ciba Specialty Chemicals Corporation of Tarrytown, N.Y. One such useful

Anti-static monomers or inert additives may be added to one or more of the asymmetric diffuser film layers or surfaces. Reactive and inert anti-static additives are well known and well enumerated in the literature. High temperature quaternary amines or conductive polymers may be used. As an anti-static agent, stearyl alcohol, behenyl alcohol, and other long-chain alkyl alcohols, glyceryl monostearate, pentaerythritol monostearate, and other fatty acid esters of polyhydric alcohols etc. may be used. In an example, stearyl alcohol and behenyl alcohol may be used.

Diffuser Film Size

The dimensions of the asymmetric diffuser film 214 may extend to be substantially located between the light paths from the light sources to the display. In case of small displays, the diffuser plate may have a dimension in one direction of 1 cm or less, such as the case of a watch display. In larger displays, a dimension of the diffuser plate will, in general, be at least as large as one dimension of the final viewing screen. The thickness of the diffuser plate or films may be from 0.5 mm to less than 100 microns.

The capability of using a thin asymmetrically diffusing film to achieve sufficient diffusion for luminance uniformity allows for less absorbance of light by the film. The thin, asymmetrically diffusing layer also permits the capability of using a thinner substrate and therefore achieving a thinner backlight.

Asymmetric Diffuser Film Configuration

The diffuser film may contain one or more diffusing layers that may symmetrically or asymmetrically diffuse incident light. The layers may be located on both or either surface of a film or within the film. In an example, an asymmetric diffusing layer is located beneath a substantially non-scattering transparent layer. Three diffusing layers may also be used and they may be separated by substantially non-diffusing regions and the axis of one or more of the diffusing layers may be parallel, orthogonal or at an angle with respect to each other. The asymmetric diffuser film may contain additional layers or elements to provide collimating properties or other optical, thermal, mechanical, electrical, and environmental properties discussed herein.

Method of Manufacturing Asymmetric Diffuser Film

In one example the method for producing an asymmetric diffusing film material contains the steps of selecting a first optically clear material and a second optically clear material, wherein the first and second optically clear materials have a refractive index difference of zero or greater than zero in at least one of the x, y, and z directions; are immiscible in one another; dispersing the second material in the first material, such as by vigorous mixing, melt mixing, compounding, mastication or a simple extrusion process of both materials; forming a film, sheet, or coating from the mixture, including hardening the film, and, where appropriate, orienting the material as an integral part of the sheet forming process to create asymmetrical optical properties. The selection of materials includes optically clear materials which are solid at room temperature and which, when heated, will become fluid at an elevated temperature such as thermoplastic polymeric materials.

Optical elements including films and coatings of a variety of thickness and structures may be manufactured using means such as film casting, sheet casting, profile extrusion, blown film extrusion, co-extrusion, injection molding, etc in accordance with examples. The material may be used as an individual diffuser film or it may be combined with other materials or effects to provide an enhanced diffuser film. The diffuser can be combined with other elements or contain features that improve the optical performance in terms of diffuse or specular transmission or reflection, gain, haze, clarity, backscatter, angular modification of the exiting light profile in one or more directions, percent of polarization preserved, and spectral transmission or absorption properties.

There are a number of different mechanisms for producing asymmetric diffusion profiles in the volume of the film. These include creating asymmetric region by aligning particles through stretching a material or stretching a material to cause particles to become symmetric in shape. Other methods of alignment such as extrusion and other methods known in the industry can be used.

In another example, a surface relief structure that asymmetrically scatters incident light is created on one or more surfaces of a diffuser film through film casting, sheet casting, profile extrusion, blown film extrusion, co-extrusion, injection molding. In an example, the refractive index of the diffuser film is substantially isotropic in one or more of the x, y, or z directions.

The diffuser film could incorporate additional features or materials to provide additional optical qualities. Examples of features include embossing one or more surfaces of the substrate or diffuser with a regular, random, semi-random surface feature. This could be a diffractive, holographic, prismatic, microlens or other structure as described above. Additives could be used within the material to improve a number of performance requirements, including optical, mechanical, thermal, and environmental resistance.

Another example is schematically illustrated in Fig. 3. The optical element 300 is an arrangement of light management films which includes a polymeric asymmetric diffuser film 314 and a supporting frame 312 located around the perimeter of the film. Other optical films are also added to the arrangement of light management layers above the polymeric asymmetric diffuser film. A bead coated collimation diffuser film 334 is placed adjacent to the polymeric asymmetric diffuser film 314. A light directing film 335 is placed adjacent to the bead coated collimation diffuser film 334, opposite the asymmetric diffuser film. A reflective polarizer film 336 is placed adjacent the light directing film 335, opposite the bead coated collimation diffuser film. Figure 3 shows one means by which the asymmetric diffuser film 314 is supported by a tensile force. A pin 316 protrudes through a slot 320 in the film. The pin has at least one surface that is normal to the direction of the tensile force. The pin 316 slides on a shaft 322. Shaft 322 is secured at both ends by the frame 312. A spring 318, which also slides on shaft 322, is compressed against pin 316 resulting in a tensile force on the asymmetric diffuser film 314 that is applied in a direction perpendicular to the edge of the film nearest the applied location. Many such spring type mechanisms are placed around the perimeter of the diffuser film 314 at various locations.

The tensioned asymmetric diffuser film 314 is self-supporting. The other optical films 334, 335, and 336 are all constrained by the frame 312 via a pin 324 which protrudes through the films via slots 326. The optical element 300 of Figure 3 can be used in place of the diffuser plate and the optional optical films of conventional LCD displays.

Another example is schematically illustrated in Fig. 4. The optical element 400 is an arrangement of light management films which includes a polymeric asymmetric diffuser film 414 and a supporting frame 412 located around the perimeter of the film. Other optical films are also added to the arrangement of light management layers above the polymeric asymmetric diffuser film. A bead coated collimation diffuser film 434 is placed adjacent to the polymeric asymmetric diffuser film 414. A light directing film 435 is placed adjacent to the bead coated collimation diffuser film 434, opposite the asymmetric diffuser film 414. A reflective polarizer film 436 is placed adjacent the light directing film 435, opposite the bead coated collimation diffuser film 434. Figure 4 shows an alternative means by which the asymmetric diffuser film 414 is supported by a tensile force. A pin 416 protrudes through a slot 420 in the film. The pin has at least one surface that is normal to the direction of the tensile force. The pin 416 is fixed into a sub-frame 413, which slides on the inner surfaces of the frame 412. A shaft 422 slides into a hole 423 in the end of sub-frame 413. Shaft 422 is secured at one end by the frame 412. A spring 418, which also slides on shaft 422, is compressed against the inside surfaces of both the sub-frame 413 and the frame 412 resulting in a tensile force on the asymmetric diffuser film 414 that is applied in a direction perpendicular to the edge of the film nearest the applied location. Many such pins as 416 are located on at least 4 different sub-frames 413 each sub-frame located on each side of the rectangular diffuser film 414. The tensioned asymmetric diffuser film 414 is self-supporting. The other optical films 434, 435, and 436 are also constrained by the sub-frame 413 via a pin 416 which protrudes through the films via slots 426 cut into each film. Each slot can either be cut as a tight tolerance fit so as to cause a tensile force to be applied to the particular film or can be cut as a oversized slot such that the film is constrained by the sub-frame yet no tensile force is applied. The optical element 400 of Figure 4 can be used in place of the diffuser plate and the optional optical films of conventional LCD displays.

Another example is schematically illustrated in Fig. 5. The optical element 500 is an arrangement of light management films, which includes a polymeric asymmetric diffuser film 514 and a supporting frame 512 located around the perimeter of the film. The frame 512 can be a separate entity that is provided to the producers of LCD's along with the films or can be the existing frame in a conventional LCD backlight. Other optical films are also added to the arrangement of light management layers above the polymeric optical diffuser film. A bead coated collimation diffuser film 534 is placed adjacent to the polymeric asymmetric diffuser film 514. A light directing film 535 is placed adjacent to the bead coated collimation diffuser film 534, opposite the asymmetric diffuser film 514. Figure 5 shows an alternative means by which the asymmetric diffuser film 514 is supported by a tensile force. In this means the light directing film 535 is also supported by a tensile force. Tensioned strap 518 protrudes through slots 520 and 521 in both the asymmetric diffuser film 514 and the light directing film 535, respectively. The tensioned strap can comprise any elastic material. Preferred materials are elastomers. Preferred elastomers are those that maintain performance for the life when used in an LCD under design temperatures of 85° C. Such elastomers include crosslinked: polyurethanes, silicone rubbers, polychloroprene, ethylene-propylene copolymer, ethylene-propylene terpolymer, vinylidene fluoride-chloro-trifluoro ethylene random copolymer, vinylidene fluoride-chloro-hexa fluoro ethylene random copolymer, high-strength buna-N rubber, and others. These elastomers may be reinforced with inorganic fillers such as talc, glass fibers, and other well known elastomer reinforcing additives. The use of stabilizers and environmental protective agents, such as antioxidants and UV stabilizers, in these elastomers is commonly known and can be used to further improve the performance over the life of an LCD. A pin 516 protrudes through holes 517 in each end of the tensioned strap. The pin 516 is fixed into the frame 512 located around the perimeter of the films. At least 4 such tensioned straps and pins as 518 and 516, respectively, are located around the perimeter of the films. The tensioned asymmetric diffuser film 514 and light directing film 535 are self-supporting. The other optical film, the bead coated collimating film 534 is constrained normal to its surface by the two tensioned films which it is sandwiched between. Other optical films can also be constrained normal to their surfaces if placed between the two tensioned films. In order to constrain the bead coated collimating film 534 in the in plane directions, pins 540 are inserted into frame 512 through both a hole 541 and a slot 542 in the film 534. These pins could protrude through any other optical films placed between the two tensioned films as well. The pinned hole 541 prevents the film from translational movement of film 534. The pinned slot 542 prevents rotation of film 534 while allowing thermal expansion in the slots's elongated direction. The optical element 500 of Figure 5 can be used in place of the diffuser plate and the optional optical films of conventional LCD displays.

Another example is schematically illustrated in Fig. 6. The optical element 600 is an arrangement of light management films which includes a polymeric asymmetric diffuser film 614 and a supporting frame 612 located around the perimeter of the film. The frame 612 can be a separate entity that is provided to the producers of LCD's along with the films or can be the existing frame in a conventional LCD backlight. Other optical films are also added to the arrangement of light management layers above the polymeric asymmetric diffuser film. A bead coated collimation diffuser film 634 is placed adjacent to the polymeric asymmetric diffuser film 614. A light directing film 635 is placed adjacent to the bead coated collimation diffuser film 634, opposite the asymmetric diffuser film 614. Figure 5 shows an alternative means by which the asymmetric diffuser film 614 is supported by a tensile force. In this means the light directing film 635 is also supported by a tensile force. Tensioned grommet 618 protrudes through slots 620 and 621 in both the asymmetric diffuser film 614 and the light directing film 635, respectively. The tensioned grommet can comprise any elastic material. Preferred materials are elastomers. Preferred elastomers are those that maintain performance for the life when used in an LCD under design temperatures of 85° C. Such elastomers include crosslinked: polyurethanes, silicone rubbers, polychloroprene, ethylene-propylene copolymer, ethylene-propylene terpolymer, vinylidene fluoride-chloro-trifluoro ethylene random copolymer, vinylidene fluoride-chloro-hexa fluoro ethylene random copolymer, high-strength buna-N rubber, and others. These elastomers may be reinforced with inorganic fillers such as talc, glass fibers, and other well known elastomer reinforcing additives. The use of stabilizers and environmental protective agents, such as antioxidants and UV stabilizers, in these elastomers is commonly known and can be used to further improve the performance over the life of an LCD. A pin 616 protrudes through a hole 617 in the tensioned grommet. The pin 616 is fixed into the frame 612 located around the perimeter of the films. At least 4 such tensioned grommets and pins as 618 and 616, respectively, are located around the perimeter of the films. The tensioned asymmetric diffuser film 614 and light directing film 635 are self-supporting. The other optical film, the bead coated collimating film 634 is constrained normal to its surface by the two tensioned films which it is sandwiched between. Other optical films can also be constrained normal to their surfaces if placed between the two tensioned films. In order to constrain the bead coated collimating film 634 in the in plane directions, pins 640 are inserted into frame 612 through both a hole 641 and a slot 642 in the film 634. These pins could protrude through any other optical films placed between the two tensioned films as well. The pinned hole 641 prevents the film from translational movement of film 634. The pinned slot 642 prevents rotation of film 634 while allowing thermal expansion in the slots's elongated direction. The optical element 600 of Figure 6 can be used in place of the diffuser plate and the optional optical films of conventional LCD displays.

Another example of the optical element is schematically illustrated in Figure 7. The optical element 700 includes a polymeric asymmetric diffuser film 714 between two transparent films 734 and 735. Transparent is defined here as having a luminous transmission when measured using ASTM D-1003-00 of greater than 70%. The typical thickness range for the outer transparent films is between 50 and 400 um. A supporting frame 712 located around the perimeter of the films. Typically for LDC displays there are 4 orthogonal edges creating a rectangular perimeter. Other optical films can also be added to the arrangement of light management layers above the polymeric asymmetric diffuser film as will be illustrated in a subsequent figure. Figure 7 shows one means by which the asymmetric diffuser film 714 is supported by outer transparent films that are themselves supported by a tensile force. A tensioned strap 718 protrudes through slots 720 and 721 in the outer transparent films. A pin 716 protrudes through holes or slots in the tensioned strap 718. The pin 716 is fixed into the frame 712. Many such tensioning straps are placed around the perimeter of the outer transparent films at various locations. Alternatively two tensioned straps 718 can be used and each protruded through slots 720 and 721 of outer transparent films 735 and 734, respectively. In such a case each of the outer transparent films 735 and 734 would be independently tensioned. The asymmetric diffuser film 714 is supported by the tensioned outer transparent films. The tensioned outer transparent films 734 and 735 are self-supporting.

The tensioned outer transparent films must have a high degree of dimensional stability in terms of shrinkage, thermal expansion coefficient, and creep. Preferably shrinkage when heated from ambient temperature (23° C) to 85° C should be less than 1.5%. Thermal shrinkage measurements are performed using samples with dimensions of approximately 35 mm wide by minimum of approximately 6 inches long. Each strip is placed in a punch to obtain a preset 6-inch gauge length. The actual gauge length is measured using a device calibrated with a 6-inch invar bar preset to measure 6-inch samples. This length is recorded to 0.0001 inches using a digital micrometer. Once the initial length is determined, samples are placed in an oven at the prescribed temperature for the necessary time interval (in this case test condition 85° C for 24 hours). Samples are then removed from the oven and placed in a controlled environment set to 23° C and 50 % relative humidity for a minimum of approximately 2 hours but generally approximately 24 hours. The final sample length is re-measured using the same setup used to determine the initial length. The shrinkage is reported in percent using the following equation:

$$\text{Percent Linear Change} = \frac{(\text{final value} - \text{initial value})}{\text{initial value}} \times 100$$

It is noted that the negative (-) sign associated with the shrinkage denotes direction of the change.

The thermal expansion coefficient (at 23° C) of the tensioned outer transparent films should preferably be less than $4.0 \times 10^{-5}$ um/um/C when measured according to ASTM method D-696.

The tensile creep compliance should preferably be less than $6 \times 10^{-10}$ Pa$^{-1}$ when measured at 23° C after 20 minutes under a constant tensile load. The tensile creep compliance is measured under a low stress such that the film behaves such that the strain is linearly proportional to the applied stress. The tensile strain is defined by the net change in length divided by the initial length at the start of the measurement. The tensile creep compliance is defined as the tensile strain divided by the applied stress. Film samples are measured in a differential elongational apparatus that is capable of maintaining a low constant load such as less than 50 MPa and is capable of measuring the length of the film specimens to an accuracy of 1 micron.

A film with high dimensional stability is defined here as one that meets the minimum preferred value of shrinkage, thermal expansion coefficient, and creep as described above (1.5%, $4.0x10^{-5}$ um/um/C, and $6x10^{-10}$ $Pa^{-1}$, respectively). A film with low dimensional stability is one that does not meet the minimum preferred value of shrinkage, thermal expansion coefficient, and creep as described above(1.5%, $4.0x10^{-5}$ um/um/C, and $6x10^{-10}$ $Pa^{-1}$, respectively).

Examples of the tensioned outer transparent films 734 and 735 include films comprising a semi-crystalline polymer. A semi-crystalline polymer matrix is preferred as it may be substantially transparent to visible light and can possess dimensional stability having a shrinkage of less than 1.0% after being tested at elevated temperatures up to 85° C. Preferably, the tensile creep compliance for the semi-crystalline polymer film is less than $5x10^{-10}$ $Pa^{-1}$ These polymers typically also meet the described criterion above for thermal expansion coefficient. Suitable polymers to meet all these criteria are polyesters and their copolymers. Desirably, these polymers are poly(ethylene terephthalate) (PET); poly(ethylene naphthalate)(PEN)polyesters and any of their copolymers. PET is particularly suitable as it is much lower in cost than PEN.

Another example is schematically illustrated in Fig. 8. The optical element 800 is an arrangement of light management films, which includes a polymeric asymmetric diffuser film 814 and a supporting frame 812 located around the perimeter of the film. The frame 812 can be a separate entity that is provided to the producers of LCD's along with the films or can be the existing frame in a conventional LCD backlight. Other optical films are also added to the arrangement of light management layers above the polymeric asymmetric diffuser film. A bead coated collimation diffuser film 833 is placed adjacent to the polymeric asymmetric diffuser film 814. A light directing film 836 is placed adjacent to the bead coated collimation diffuser film 833, opposite the asymmetric diffuser film 814. Figure 8 shows how asymmetric diffuser film 814, the bead coated collimation diffuser film 833, and the light directing film 836 are supported by tensioned outer transparent films 834 and 835. In this means both the outer transparent films 834 and 835 are themselves supported by a tensile force. Tensioned strap 818 protrudes through slots 820 and 821 in both the outer transparent films 835 and 834, respectively. A pin 816 protrudes through holes 817 in each end of the tensioned strap. The pin 816 is fixed into the frame 812 located around the perimeter of the films. At least 4 such tensioned straps and pins as 818 and 816, respectively, are located around the perimeter of the films. The optical films 814, 833, and 836 are constrained normal to its surface by the two tensioned outer transparent films which they are sandwiched between. Other optical films can also be constrained normal to their surfaces if placed between the two tensioned outer transparent films. The optical element 800 of Figure 8 can be used in place of the diffuser plate and the optional optical films of conventional LCD displays.

In another example of the optical element, two integrally bound optically transmissive substrates that together are self-supporting are juxtaposed on either side of a polymeric asymmetric diffuser film. Alternatively, two optically transmissive substrates that together are self-supporting wherein one substrate is optically diffuse can also be used. Several examples of the optical element are schematically illustrated in Figure 9. The figure shows the same light management layers with five different means to attach the two optically transmissive substrates to each other, labeled a thru e. The arrangement of light management layers 900 includes a first optically transmissive substrate 912 and a polymeric asymmetric diffuser film 914 adjacent to the substrate. A second optically transmissive substrate 913 is adjacent to the polymeric asymmetric diffuser film 914 on the opposing side as the first optically transmissive substrate 912. Other optical films can also be added to the arrangement of light management layers above the polymeric asymmetric diffuser film 914 and below substrate 913 as will be illustrated in subsequent Figures. Figure 9a shows one means by which the substrates 912 and 913 are attached to each other. A pin 917 or edge supporting element can be fit into a holes formed in both substrates 912 and 913. The pins can be placed around the outer edge perimeter of the optical element. The pins can either be press fit into the holes of the substrates or adhered to the substrates using adhesive, or both. A hole or slot 915 in the asymmetric diffuser film 914 is also provided for the pin to pass thru the optical diffuser film. The hole or slot 915 would preferably be somewhat oversized to allow the asymmetric diffuser film to expand or shrink at different rates as the substrate upon various temperature and humidity conditions. Figure 9b shows another means by which the substrates 912 and 913 are attached to each other. Edge binding clips 919 edge supporting element are used similar to that of plastic notebooks with plastic binding clips. These clips can be adhered to the substrates with the use of adhesive. The inside face of the binding clip which is adjacent the outer edge perimeter of the optically transmissive substrates can be a highly reflective material to prevent light loss via light piping in the substrates. Figure 9c also shows the use of edge binding clips 919. In this case the clips exert a squeezing force to the substrates which are kept spaced apart via a spacer 911. The squeezing force of the clips on the substrates and on the spacer integrally bind the substrates and spacers via frictional forces between the clips and the substrates. Figure 9d shows the use of edge substrates 921 that are fastened to each of the two optically transmissive substrates 912 and 913 via pins 923.

These pins 923 are either press fit into holes in the edge substrate 921 and the substrates 912 and 913 or fixed with adhesive or both. The inside face of the edge substrates which are adjacent the edges of the optically transmissive substrates can be a highly reflective material to prevent light loss via light piping in the substrates. Figure 9e illustrates the substrates 912 and 913 along with asymmetric diffuser film 914 being held together via electrostatic forces. No separate clip or substrate is required as electrostatic forces between the layers hold the layers together. This can be accomplished by subjecting one side of the arrangement of light management layers to a very high positive voltage while applying a very high negative voltage to the opposite side.

The substrates 912 and 913 are sheets of material that together are self-supporting, and are used to provide support to the layers between them in the light management arrangement. One or both of the optically transmissive substrates may be self-supporting on their own. The substrates 912 and 913 may be, for example, up to a few mm in combined thickness, depending on the size of the display. Typically the substrates are each between 0.25 and 4 mm thick. Preferably, they are each between 0.75 and 1.25 mm thick. One or both of the optically transmissive substrates may be self-supporting on their own.

The substrates 912 and 913 may be made of any material that is substantially transparent to visible light, for example, organic or inorganic materials, including glasses and polymers. Suitable glasses include float glasses, i.e. glasses made using a float process, or LCD quality glasses, referred as LCD glass, whose characteristic properties, such as thickness and purity, are better controlled than float glass. One approach to forming LCD glass is to form the glass between rollers.

The substrates 912 and 913, the asymmetric diffuser film 914, and one or more other light management layers may be included in a light management arrangement disposed between the backlight and the LCD panel. The substrates 912 and 913 provide a stable structure for supporting the light management arrangement in a unitary optical element. The substrates 912 and 913 are less prone to warping than conventional diffuser plate systems, particularly if the substrates 912 and 913 are formed of a warp-resistant material such as glass.

Suitable polymer materials used to make the substrates 912 and 913 may be amorphous or semi-crystalline, and may include homopolymer, copolymer or blends thereof. Example polymer materials include, but are not limited to, amorphous polymers such as poly(carbonate) (PC); poly(styrene) (PS); acrylates, for example acrylic sheets as supplied under the ACRYLITE® brand by Cyro Industries, Rockaway, N.J.; acrylic copolymers such as isooctyl acrylate/acrylic acid; poly(methylmethacrylate) (PMMA); PMMA copolymers; cycloolefins; cylcoolefin copolymers; acrylonitrile butadiene styrene (ABS); styrene acrylonitrile copolymers (SAN); epoxies; poly(vinylcyclohexane); PMMA/poly(vinylfluoride) blends; atactic poly(propylene); poly(phenylene oxide) alloys; styrenic block copolymers; polyimide; polysulfone; poly (vinyl chloride); poly(dimethyl siloxane) (PDMS); polyurethanes; poly(carbonate)/aliphatic PET blends; and semicrystalline polymers such as poly(ethylene); poly(propylene); poly(ethylene terephthalate) (PET); poly(ethylene naphthalate) (PEN); polyamide; ionomers; vinyl acetate/polyethylene copolymers; cellulose acetate; cellulose acetate butyrate; fluoropolymers; poly(styrene)-poly(ethylene) copolymers; and PET and PEN copolymers.

Other materials may be included in the optically transmissive substrate 912 and 913 to reduce the adverse effects of UV light. One example of such a material is a hindered amine light stabilizing composition (HALS). Generally, the most useful HALS are those derived from a tetramethyl piperidine, and those that can be considered polymeric tertiary amines. Suitable HALS compositions are available commercially, for example, under the "Tinuvin" tradename from Ciba Specialty Chemicals Corporation of Tarrytown, N.Y. One such useful HALS composition is Tinuvin 622.

Another example is schematically illustrated in Fig. 10. The arrangement of light management layers 1000 includes optically transmissive substrates 1012 and 1013, which together are self-supportive, and an asymmetric diffuser film 1014 placed between the substrates adjacent to substrate 1012. A bead coated collimation diffuser film 1015 is also placed between the optically transmissive substrates 1012 and 1013 adjacent to the asymmetric diffuser film 1014. In this example the optically transmissive substrates 1012 and 1013 are integrally bound by an edge binding clip 1019.

Another example is schematically illustrated in Fig. 11. The arrangement of light management layers 1100 includes optically transmissive substrates 1112 and 1113, which together are self-supportive, and an asymmetric diffuser film 1114 placed between the substrates adjacent to substrate 1112. A bead coated collimation diffuser film 1115 is also placed between the optically transmissive substrates 1112 and 1113 adjacent to the asymmetric diffuser film 1114. A prismatic light directing film 1116 is also placed between the optically transmissive substrates 1112 and 1113 adjacent to the bead coated collimation diffuser film 1115. In this example the optically transmissive substrates 1112 and 1113 are integrally bound by an edge binding clip 1119.

Another example is schematically illustrated in Fig. 12. The arrangement of light management layers 1200 includes optically transmissive substrates 1212 and 1213, which together are self-supportive, and an asymmetric diffuser film 1214 placed between the substrates adjacent to substrate 1212. A bead coated collimation diffuser film 1215 is also placed between the optically transmissive substrates 1212 and 1213 adjacent to the asymmetric diffuser film 1214. A prismatic light directing film 1216 is also placed between the optically transmissive substrates 1212 and 1213 adjacent to the bead coated collimation diffuser film 1215. A reflective polarizer film 1218 is also placed between the optically transmissive substrates 1212 and 1213 adjacent to the prismatic light directing film 1216. In this embodiment the optically transmissive substrates 1212 and 1213 are integrally bound by an edge binding clip 1219.

Another example is schematically illustrated in Fig. 13. The arrangement of light management layers 1300 includes optically transmissive substrates 1312 and 1313, which together are self-supportive. The optically transmissive substrates 1312 which would be adjacent to the light source in a LCD display is asymmetrically diffusing, similar to the diffuser film 214 described above. In this example the optically transmissive substrates 1312 and 1313 are integrally bound by an edge binding clip 1319. A bead coated collimation diffuser film 1315 is also placed between the optically transmissive substrates 1312 and 1313 adjacent to the optically transmissive substrates 1312. A prismatic light directing film 1316 is also placed between the optically transmissive substrates 1312 and 1313 adjacent to the bead coated collimation diffuser film 1315. A reflective polarizer film 1318 is also placed between the optically transmissive substrates 1312 and 1313 adjacent to the prismatic light directing film 1316.

In the examples where more than one optical film is restrained (as in Figures 2 thru 13) typically none of the optical films are adhered to each other. There may be benefit for two optical films to be adhered to each other from a cost of manufacturing standpoint but typically one or more of the optical films are not adhered to each other.

Example

In order to demonstrate an example a commercial LCD TV was procured. The TV chosen was a 42" LG Philips LCD TV, model 42LB5D. The LC panel and the arrangement of light management films was removed from the TV exposing an array of CCFLs in the backlight unit. A conventional 1.5 mm slab diffuser (from 42" LG Philips TV) was installed over the CCFLs. Then a conventional 200 um bead coated collimating diffuser (bottom diffuser from 42" LG Phillips TV) was placed over the slab diffuser. Next, a conventional prismatic collimation film(from 42" LG. Philips TV) was placed over the bead coated collimation film. Finally, a conventional 200 um bead coated collimating diffuser (top diffuser from 42" LG Philips TV) was placed over the prismatic collimating film.

The optical performance of the backlight only was then tested for Luminance to compare to the subsequent stack-up using the present invention.

The light management films were again removed from the backlight unit, which was next outfitted with a tensioned support arrangement of the present invention as that shown in Figure 5.

The center film used in the installation as shown in Fig. 5 was the same conventional prismatic collimation film (from 42" LG Phillips TV) used in the prior conventional stack-up. The Top film used in the installation as shown in Figure 5 was the conventional 200 um bead coated collimating diffuser (top diffuser from 42" LG Phillips TV) used in the prior conventional stack-up. The base film(immediately above the CCFLs) used in the tensioned stack-up was a commercial volumetric asymmetric diffuser (ADF7010, from "Fusion Optix, Inc" in Cambridge, MA). The asymmetry ratio of the ADF7010 film was 6.5. The asymmetric diffuser was oriented such that the highly diffusive axis of the film was oriented perpendicular to the CCFLs. The 3 films as just described were assembled into a tensioned frame design as that shown in Figure 5. 26 elastic straps were used and were comprised of 750 um thick polyurethane (McMaster-Carr #1446T41). The straps were cut 6 mm in width and tensioned to 650 grams. The tensioned support arrangement as described in Figure 5 using the films described above was fastened to the backlight unit frame and the added center support around the periphery of the exposed CCFLs using screws.

The optical performance of the backlight only was then again tested to compare the tensioned light management layers output to that of the conventional light management layers. Upon illuminating the CCFLs the backlight showed excellent uniformity with no visual perception of the CCFLs behind the tensioned arrangement of light management layers.

The measuring equipment was an ELDIM 160R EZ Contrast conscope - 2mm spot size with a 1.2 mm distance from sample. The ELDIM 160R EZ Contrast conscope was used to determine the on-axis luminance and the 40 degree horizontal tilt luminance emitting from each arrangement of light management layers described above. On-axis luminance is the intensity of light emitting normal to the backlight and 40 degree horizontal tilt luminance is the intensity of light emitting from an axis tilted 40 degree from on-axis in a plane parallel to the axis of the CCFLs. Data was reported as the luminance in candela per square meter(cd/m$^2$). Table 1 shows the results of the measurements described above.

TABLE 1

| Configuration | Conv. Films | Tensioned Films W/Asymmetric Dif. |
|---|---|---|
| On-Axis Luminance (cd/m$^2$) 40 deg. | 11240 | 11400 |

(continued)

| Luminance (cd/m$^2$) | 4780 | 4960 |
|---|---|---|

Parts List

| | |
|---|---|
| 100 | direct-lit LC display device |
| 110 | backlight |
| 112 | reflector |
| 114 | light sources |
| 120 | light management layers |
| 122 | diffuser plate |
| 124 | collimating diffuser film |
| 126 | light directing film |
| 128 | reflective polarizer |
| 130 | front LC panel assembly |
| 132 | lower absorbing polarizer |
| 134 | panel plates |
| 136 | LC layer |
| 138 | upper absorbing po larizer |
| 139 | optionallayer(s) |
| 140 | LC panel |
| 150 | controller |
| 200 | optical element |
| 212 | supporting frame |
| 214 | polymeric asymmetric diffuser film |
| 216 | pin |
| 218 | spring |
| 220 | slot |
| 222 | shaft |
| 300 | optical element |
| 312 | supporting frame |
| 314 | polymeric asymmetric diffuser film |
| 316 | pin |
| 318 | spring |
| 320 | optical element |
| 322 | shaft |
| 324 | pin |
| 326 | slot |
| 334 | collimated diffuser film |
| 335 | light directing film |
| 336 | reflective polarizer |
| 400 | optical element |
| 412 | supporting frame |
| 413 | subframe |
| 414 | polymeric asymmetric diffuser film |
| 416 | pin |
| 418 | spring |
| 420 | slot |
| 422 | shaft |
| 423 | hole |
| 426 | slot |
| 434 | collimation diffuser film |
| 435 | light directing film |
| 436 | reflective polarizer |

| 500 | optical element |
|---|---|
| 512 | supporting frame |
| 514 | polymeric asymmetric diffuser film |
| 516 | pin |
| 517 | hole in tensioned strap |
| 518 | tensioned strap |
| 520 | hole in light directing film |
| 521 | hole in polymeric optical diffuser film |
| 534 | collimation diffuser film |
| 535 | light directing film |
| 540 | pin |
| 541 | hole in collimation diffuser film |
| 542 | slot in collimation diffuser film |
| 600 | optical element |
| 612 | supporting frame |
| 614 | polymeric asymmetric diffuser film |
| 616 | pin |
| 617 | hole in tensioned grommet |
| 618 | tensioned grommet |
| 620 | hole in polymeric optical diffuser film |
| 621 | hole in light directing film |
| 634 | collimation diffuser film |
| 635 | light directing film |
| 640 | pin |
| 641 | hole in collimation diffuser film |
| 642 | slot in collimation diffuser film |
| 700 | optical element |
| 712 | supporting frame |
| 714 | polymeric asymmetric diffuser film |
| 716 | pin |
| 717 | slot or hole |
| 718 | tensioned strap(spring) |
| 720 | slot |
| 721 | slot |
| 734 | transparent tensioned film |
| 735 | transparent tensioned film |
| 800 | optical element |
| 812 | supporting frame |
| 814 | polymeric asymmetric diffuser film |
| 816 | pin |
| 817 | hole in tensioned strap |
| 818 | tensioned strap |
| 820 | slot or hole in outer transparent film |
| 821 | slot or hole in outer transparent film |
| 833 | collimation diffuser film |
| 834 | transparent tensioned film |
| 835 | transparent tensioned film |
| 836 | light directing film |
| 900 | light management layers |
| 911 | spacer |
| 912 | first optically transmissive substrate |
| 913 | second optically transmissive substrate |
| 914 | polymeric asymmetric diffuser film |
| 915 | bead coated light collimation film |
| 917 | pin |
| 919 | edge binding clip |
| 921 | edge substrate |
| 923 | pin |

| 1000 | light management layers |
| 1012 | first optically transmissive substrate |
| 1013 | second optically transmissive substrate |
| 1014 | polymeric asymmetric diffuser film |
| 1015 | collimating film |
| 1019 | edge binding clip |
| 1100 | light management layers |
| 1112 | first optically transmissive substrate |
| 1113 | second optically transmissive substrate |
| 1114 | polymeric asymmetric diffuser film |
| 1115 | collimating diffuser film |
| 1116 | prismatic light directing film |
| 1119 | edge binding clip |
| 1200 | light management layers |
| 1212 | first optically transmissive substrate |
| 1213 | second optically transmissive substrate |
| 1214 | polymeric asymmetric diffuser film |
| 1215 | collimating diffuser film |
| 1216 | prismatic light directing film |
| 1218 | reflective polarizer film |
| 1219 | edge binding clip |
| 1300 | light management layers |
| 1312 | first optically transmissive substrate |
| 1313 | second optically transmissive substrate |
| 1315 | collimating diffuser film |
| 1316 | prismatic light directing film |
| 1318 | reflective polarizer film |
| 1319 | edge binding clip |

**Claims**

1. An optical element (200), for use in an LCD display, having an optical film (214), the optical element comprising:

a support frame (212) havlng a shaft (222) therein, the support frame being provided around a perimeter of the optical element;
the optical film having slots (220) on a periphery thereon, the periphery of the optical film being provided on the support frame;
a pin (216) provided in each of the slots and protruding into the support frame and slidable on the shaft by a controlled tensile force;
a spring mechanism (218) that is slidable on the shaft for providing the controlled tensile force to the optical film; and
wherein the optical film is an asymmetric diffuser.

**Patentansprüche**

1. Optisches Element (200) zur Verwendung in einem LCD-Display, welches eine optische Folie (214) aufweist, wobei das optische Element umfaßt:

einen Trägerrahmen (212) mit einem Schaft (222) darin, wobei der Trägerrahmen um die Umfassung des optischen Elements angeordnet ist, wobei die optische Folie Schlitze (220) auf einer Peripherie darauf aufweist, wobei die Peripherie der optischen Folie auf dem Trägerrahmen angeordnet ist,
einen Pin bzw. Anschlußstift (216), angeordnet in jedem der Schlitze und vorspringend in den Trägerrahmen und verschiebbar auf dem Schaft durch eine kontrollierte Zugkraft,
einen Federmechanismus (218), welcher verschiebbar auf dem Schaft zur Bereitstellung der kontrollierten Zugkraft auf die optische Folie ist, und
wobei die optische Folie ein asymmetrischer Diffuser ist.

**Revendications**

1. Elément optique (200) destiné à être utilisé dans un afficheur à cristaux liquides, comportant un film optique (214), l'élément optique comprenant :

   un cadre de support (212) comportant un arbre (222) dans celui-ci, le cadre de support étant prévu autour d'un périmètre de l'élément optique ;
   le film optique comportant des fentes (220) sur une périphérie de celui-ci, la périphérie du film optique étant prévue sur le cadre de support ;
   une broche (216) prévue dans chacune des fentes et faisant saillie dans le cadre de support et capable de coulisser sur l'arbre par l'application d'une force de traction contrôlée ;
   un mécanisme à ressort (218) qui est capable de coulisser sur l'arbre pour appliquer la force de traction contrôlée au film optique ; et
   dans lequel le film optique est un diffuseur asymétrique.

FIG. 1

200

214

216

220

218

222

212

PLAN VIEW

EXPLODED SIDE VIEW

FIG. 2

300

PLAN VIEW

EXPLODED SIDE VIEW

336
335
334
314
320
316
324
326
312
318
322

FIG. 3

EP 2 023 166 B1

400

436

435

434

414

420

416

426

413

418

422

423

412

EXPLODED SIDE VIEW

PLAN VIEW

FIG. 4

EP 2 023 166 B1

PLAN VIEW

EXPLODED SIDE VIEW

FIG. 5

EP 2 023 166 B1

PERSPECTIVE VIEW

600

PLAN VIEW

EXPLODED SIDE VIEW

FIG. 6

EP 2 023 166 B1

700

720

735  721  716  717

714  734  718

712

EXPLODED SIDE VIEW

PLAN VIEW

FIG. 7

EP 2 023 166 B1

800

835  820  816  817
836
833
834  814  821  818
812

EXPLODED SIDE VIEW

PLAN VIEW

EP 2 023 166 B1

FIG. 8

FIG. 9

EP 2 023 166 B1

FIG. 10

1100

1119

1113

1116

1115

1114

1112

EP 2 023 166 B1

FIG. 11

1200

1219

1213

1218

1216

1215

1214

1212

FIG. 12

EP 2 023 166 B1

1300

1319

1313

1318

1316

1315

1312

FIG. 13

EP 2 023 166 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20060082699 A
- EP 1408349 A
- WO 0248760 A
- US 6773801 B